# EUROPÄISCHE PATENTSCHRIFT

(11) **EP 0 443 057 B1**
(45) Veröffentlichungstag und Bekanntmachung des Hinweises auf die Patenterteilung: **24.08.1994**
(21) Anmeldenummer: 90103289.6
(22) Anmeldetag: 21.02.1990
(51) Int. Cl.: B60N 2/00

(54) **Fahrgastsitz**
Passenger seat
Siège de passager

(43) Veröffentlichungstag der Anmeldung: 28.08.1991
(73) Patentinhaber: Ignaz Vogel GmbH & Co KG, Fahrzeugsitze, D-76228 Karlsruhe (DE)
(72) Erfinder: Vogel, I., D-7500 Karlsruhe 41 Stu. (DE)
(74) Vertreter: Trappenberg, Hans

(56) Entgegenhaltungen:
- DE-B- 1 024 815
- DE-U- 8 600 508
- DE-U- 8 600 815
- DE-U- 8 713 627
- US-A- 2 553 042

## Beschreibung

Die Erfindung betrifft einen Fahrgastsitz zur Reihenbestuhlung von Fahrzeugen für Personenbeförderung mit einem Sitzteil und einem starr oder verschwenkbar mit ihm verbundenen Rückenteil, das aus einem umgebenden Rahmen besteht, in den eine Rückenlehne eingefügt ist (s. zum Beispiel US-A-2 553 042).

Derartige Fahrgastsitze werden zur Bestuhlung von Luft-, Land- und Wasserfahrzeugen in sehr großen Stückzahlen benötigt. Hierbei dienen die Fahrgastsitze nicht nur dem Komfort der Passagiere, sondern stellen insbesondere bei Luft- und Landfahrzeugen auch ein Sicherheitselement dar, das so aufgebaut sein muß, daß die Folgen eines Unfalles weitestgehend vermindert werden. Hierzu müssen die Fahrgastsitze nicht nur entsprechend stabil und auch sicher verankert sein, sondern sie müssen auch in der Lage sein, unter Energieumwandlung aufprallende Körper so aufzufangen, daß Verletzungen weitgehend ausgeschlossen sind. Dem wird in aller Regel dadurch Rechnung getragen, daß die verhältnismäßig steifen Fahrgastsitze rückseitig eine großflächige Blende aufweisen, die durch ihre Form geeignet ist, auftreffende Körper ohne Verletzungen aufzunehmen. Entsprechende Versuche haben jedoch gezeigt, daß diese großflächige Rückenabdeckung den Nachteil hat, daß die auf diesen hintereinander angeordneten Fahrgastsitzen sitzenden Passagiere bei einem Unfall insgesamt nach vorne auf die Rückenabdeckung des davor angeordneten Fahrgastsitzes bewegt werden, dort zuerst mit den Knien aufschlagen, und dadurch beim Weiterbewegen des Rumpfes nach oben über die Rückenlehne hinweggeschleudert werden. Diese Vor/Aufwärts-Bewegung führt bei einem Unfall zu erheblichen Knie- und Weichteilverletzungen wie auch bei schlecht angeordneten Kopfstützen zu Gesichtsverletzungen und einem Schleudertrauma. Diese gesamten Verletzungen würden ausbleiben, wenn sich der Körper nur nach vorne bewegen und hierbei großflächig von der Rückenabdeckung des Vordersitzes aufgefangen würde.

Aufgabe der Erfindung ist es daher, eine Möglichkeit anzugeben, wie dieser, die Verletzungsgefahr deutlich mindernde Zustand, erreicht werden kann. Erreicht wird dies in erfindungsgemäßer Weise dadurch, daß in eine Aussparung der Rückenlehne beim Übergang des Sitzteils in das Rückenteil ein den Rahmen überspannendes, die Aussparung nahezu vollständig überdeckendes, im Einfügezustand steifes, jedoch in engen Grenzen dehnbares Band eingefügt ist.

Bei dieser erfindungsgemäßen Anordnung prallen zwar auch die Kniee des sitzenden Passagiers auf die rückseitige Abdeckung des Vordersitzes auf, durchbrechen nunmehr aber diese Abdeckung, treffen auf das in engen Grenzen dehnbare Band auf und schieben sich über das Sitzteil des Vordersitzes. Dadurch entfällt der Zwang zur Aufwärtsbewegung des sich weiter vorwärts bewegenden Rumpfes; vielmehr bleibt der Rumpf in seiner vorherigen Höhenlage, trifft also mit der gesamten Körperfläche und daher mit einem äußerst geringen spezifischen Druck auf die rückseitige Abdeckung der Rückenlehne auf und wird dort ohne Verletzung aufgefangen. Hinzu kommt, daß das in engen Grenzen dehnbare Band bereits die Aufprallenergie der Kniee umwandelt, so daß an dieser Stelle bereits ein Teil der Aufprallenergie des auf den Vordersitz prallenden Körpers aufgezehrt ist.

Das in "engen Grenzen dehnbare Band" kann aus unterschiedlichen Materialien sein. Zu berücksichtigen ist, daß es im Normalzustand steif, also unter Normalbeanspruchung nicht verformbar sein soll, um die äußere Gestalt der Fahrgastsitze beizubehalten. Eine Möglichkeit ist allerdings auch durch die Erfindung gegeben dadurch, daß vor dem Band ein die Rückseite des Rückenteils bestimmendes, steifes, jedoch nachgiebiges Formteil angebracht ist. Dieses "steife, jedoch nachgiebige Formteil" kann beispielsweise aus einem Thermoplast bestehen, das zwar bei normaler Beanspruchung nicht nachgibt, jedoch beim Aufprallen der Knie eines nach vorne geschleuderten Körpers unter Aufnahme von Formänderungsarbeit den Weg zu dem "in engen Grenzen dehnbaren" Band freigibt. Bei Anwendung dieser Erfindungsidee kann das Band auch ein Gewebeband sein, das ähnlich ausgeführt wird wie die bekannten Sicherheitsgurte, die ebenfalls lediglich in engen Grenzen irreversibel dehnbar sind.

Als weiteres Material zur Herstellung der Bänder empfiehlt sich ein nachgiebiger, irreversibel verformbarer Kunststoff, wobei der Kunststoff auch mehrschichtig aufgebaut und auch mit Gewebeeinlagen versehen sein kann. Durchaus denkbar ist auch ein Metallband zu verwenden, das den gestellten Anforderungen dadurch genügen kann, daß es entweder gewellt oder mit spitzen Sicken versehen ist. In beiden Fällen wird die Wellung beziehungsweise werden die Sicken beim Aufprallen der Knie gestreckt, so daß das Metallband bis zu der vorbestimmten Länge ausweichen kann. Eine Möglichkeit wird auch bei einem Metallband darin gesehen, daß das Band in einer offenen Umschlingung um den Rahmen herumgeschlungen ist. Diese Umschlingung wird beim Aufprall der Knie aufgezogen, so daß auch dieses Metallband dem Druck nachgeben kann und Energie umformt. Auch Loch-Metallbänder können für diese Aufgabe vorgesehen werden, wobei jedoch Sorge dafür zu tragen ist, daß bei der Verformung des Bandes das Band nicht einreißt und dadurch zu Verletzungen führt. Das Metallband kann sowohl aus Tiefziehblech als auch aus Leichtmetall sein.

Statt eines einzigen Bandes können auch mehrere übereinander in den Rahmen eingefügte Bandstreifen vorgesehen werden, wodurch der unterschiedlichen Gestaltung der Passagiere Rechnung getragen ist.

Auf der Zeichnung ist die Erfindung anhand von Schemazeichnungen dargestellt, und zwar zeigen:
- Fig. 1: die Rückseite eines Fahrgastsitzes und die
- Fig. 2 bis Fig. 6: verschiedene Ausführungsarten des erfindungsgemäßen Bandes.

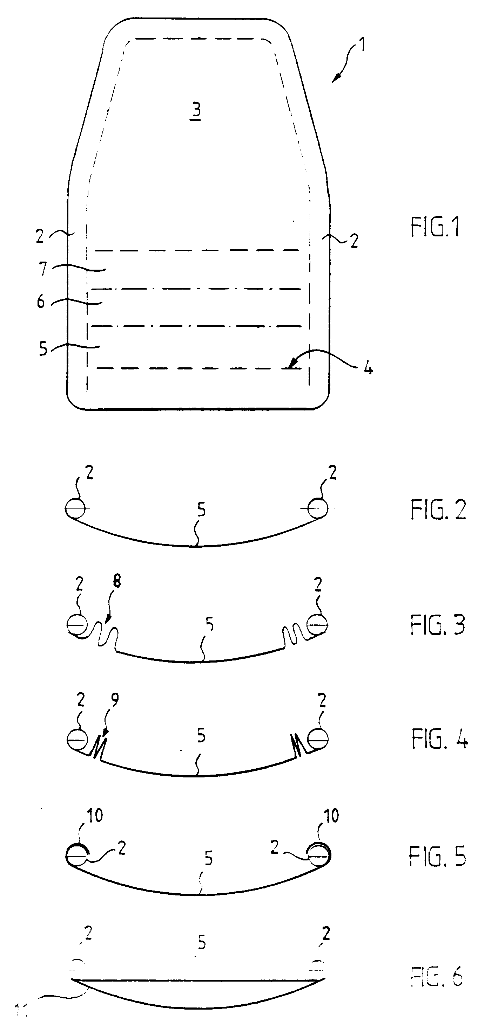

Der Rückenteil (1) eines Fahrgastsitzes wird gebildet durch einen umgebenden Rahmen (2), in den eine Rückenlehne (3) eingefügt ist. Die Höhe des vor diesem Rückenteil (1) angeordneten Sitzteils ist durch eine gestrichelte Linie (4) dargestellt. Ab diesem Übergangsbereich vom Sitzteil in das Rückenteil (1) ist zwischen den beiden Rahmenteilen (2) ein in engen Grenzen dehnbares Band (5, 6, 7) eingefügt, wobei durchaus die rückseitige Gestaltung des Rückenteils (1) beibehalten werden, das Band (5, 6, 7) also für den Passagier unsichtbar hinter der üblichen Rückenteilverkleidung liegen kann. Besteht dieses Band aus einem nachgiebigen, irreversibel verformbaren Material, beispielsweise einem Kunststoff, so kann die Form nach Fig. 2 gewählt werden. Wird ein Metallband eingesetzt, kann das Metallband, wie dies die Fig. 3 und 4 zeigen, mit Wellungen (8) oder Sicken (9) versehen werden, die sich unter entsprechender Belastung aufziehen, so daß auch dieses Metallband der Forderung nach in engen Grenzen bestehender Dehnbarkeit genügt. Eine weitere Möglichkeit besteht darin, wie dies Fig. 5 zeigt, das Metallband mit seinen Enden (10) um den Rahmen (2) herumzuschlingen, so daß das Band ebenfalls bei entsprechender Belastung ausweichen kann. Fig. 6 zeigt schließlich ein zwischen den Rahmen (2) eingespanntes, die Rückseite des Rückenteils bestimmendes Band (5), das von einem steifen, jedoch nachgiebigen Formteil (11) abgedeckt ist.

## Patentansprüche

1. Fahrgastsitz zur Reihenbestuhlung von Fahrzeugen für Personenbeförderung mit einem Sitzteil und einem starr oder verschwenkbar mit ihm verbundenen Rückenteil, das aus einem umgebenden Rahmen besteht, in den eine Rückenlehne eingefügt ist,
dadurch gekennzeichnet,
daß in eine Aussparung der Rückenlehne (3) beim Übergang des Sitzteils (4) in das Rückenteil (3) ein den Rahmen (2) überspannendes, die Aussparung nahezu vollständig überdeckendes, im Einfügezustand steifes, jedoch in engen Grenzen dehnbares Band (5, 6, 7) eingefügt ist.

2. Fahrgastsitz nach Anspruch 1,
dadurch gekennzeichnet,
daß das Band aus einem nachgiebigen, irreversiblen verformbaren Kunststoff ist.

3. Fahrgastsitz nach Anspruch 2,
dadurch gekennzeichnet,
daß das Band (5, 6, 7) mehrschichtig ist.

4. Fahrgastsitz nach Anspruch 2 oder 3,
dadurch gekennzeichnet,
daß das Band (5) mit Gewebeeinlagen versehen ist.

5. Fahrgastsitz nach Anspruch 1,
dadurch gekennzeichnet,
daß das Band ein zumindest teilweise gewelltes Metallband (8) ist.

6. Fahrgastsitz nach Anspruch 1,
dadurch gekennzeichnet,
daß das Band (5) ein mit spitzen Sicken versehenes Metallband (9) ist.

7. Fahrgastsitz nach Anspruch 1 oder 5,
dadurch gekennzeichnet,
daß das Band (5) ein in einer offenen Umschlingung (10) um den Rahmen (2) herumgeschlungenes Metallband ist.

8. Fahrgastsitz nach Anspruch 5, 6 oder 7,
dadurch gekennzeichnet,
daß das Metallband (8, 9) aus Tiefziehblech ist.

9. Fahrgastsitz nach Anspruch 5, 6 oder 7,
dadurch gekennzeichnet,
daß das Metallband aus Leichtmetall ist.

10. Fahrgastsitz nach einem oder mehreren der vorhergehenden Ansprüche,
dadurch gekennzeichnet,
daß vor dem Band (5) ein die Rückseite des Rückenteils (1) bestimmendes, steifes, jedoch nachgiebiges Formteil (11) angebracht ist.

11. Fahrgastsitz nach einem oder mehreren der vorhergehenden Ansprüche,
dadurch gekennzeichnet,
daß das Band aus mehreren, übereinander in den Rahmen (2) eingefügten Bandstreifen (5, 6, 7) gebildet ist.

## Claims

1. A passenger seat for seating in rows in vehicles for transporting people, comprising a seat portion and a back portion which is rigidly or pivotably connected thereto and which comprises a surrounding frame into which a backrest is inserted, characterised in that inserted into an opening in the backrest (3) at the transition of the seat portion (4) into the back portion (3) is a strip (5, 6, 7) which spans the frame (2) and which almost completely covers over the opening and which is stiff in the inserted condition but is stretchable within close limits.

2. A passenger seat according to claim 1 characterised in that the strip comprises a yielding, irreversibly deformable plastics material.

3. A passenger seat according to claim 2 characterised in that the strip (5, 6, 7) is a multilayer strip.

4. A passenger seat according to claim 2 or claim 3 characterised in that the strip (5) is provided with fabric inlays.

5. A passenger seat according to claim 1 characterised in that the strip is an at least partially corrugated metal strip (8).

6. A passenger seat according to claim 1 characterised in that the strip (5) is a metal strip (9) provided with pointed corrugations.

7. A passenger seat according to claim 1 or claim 5 characterised in that the strip (5) is a metal strip which is wrapped in an open loop configuration (10) around the frame (2).

8. A passenger seat according to claim 5, claim 6 or claim 7 characterised in that the metal strip (8, 9) is of deep drawing sheet metal.

9. A passenger seat according to claim 5, claim 6 or claim 7 characterised in that the metal strip is of light metal or alloy.

10. A passenger seat according to one or more of the preceding claims characterised in that disposed in front of the strip (5) is a stiff but yielding shaped portion (11) which defines the rear side of the back portion (1).

11. A passenger seat according to one or more of the preceding claims characterised in that the strip is formed from a plurality of strip portions (5, 6, 7) which are inserted into the frame (2) in mutually superposed relationship.

## Revendications

1. Siège de passager pour équiper, de rangées de sièges, des véhicules destinés au transport de personnes, comprenant une partie d'assise et une partie d'adossement qui est reliée à cette dernière, de manière rigide ou avec faculté de pivotement, et consiste en un cadre périphérique dans lequel un dossier est enchâssé,
caractérisé par le fait
qu'un ruban (5, 6, 7), intégré dans une échancrure du dossier (3) à la transition entre la partie d'assise (4) et la partie d'adossement (1), recouvre presque intégralement l'échancrure, enjambe le cadre (2) et est rigide à l'état intégré, en étant cependant extensible dans d'étroites limites.

2. Siège de passager selon la revendication 1,
caractérisé par le fait
que le ruban consiste en une matière plastique souple à déformabilité irréversible.

3. Siège de passager selon la revendication 2,
caractérisé par le fait
que le ruban (5, 6, 7) se compose de plusieurs couches.

4. Siège de passager selon la revendication 2 ou 3,
caractérisé par le fait
que le ruban (5) est muni d'inclusions tissées.

5. Siège de passager selon la revendication 1,
caractérisé par le fait
que le ruban est un ruban métallique au moins partiellement ondulé (8).

6. Siège de passager selon la revendication 1,
caractérisé par le fait
que le ruban (5) est un ruban métallique doté de moulures (9) à angles aigus.

7. Siège de passager selon la revendication 1 ou 5,
caractérisé par le fait
que le ruban (5) est un ruban métallique enroulé autour du cadre (2), en un enlacement ouvert (10).

8. Siège de passager selon la revendication 5, 6 ou 7,
caractérisé par le fait
que le ruban métallique (8, 9) consiste en de la tôle venue d'emboutissage profond.

9. Siège de passager selon la revendication 5, 6 ou 7,
caractérisé par le fait
que le ruban métallique consiste en un métal léger.

10. Siège de passager selon l'une ou plusieurs des revendications précédentes,
caractérisé par le fait
qu'une pièce moulée (11), rigide mais douée d'élasticité et déterminant la face postérieure de la partie d'adossement (1), est mise en place devant le ruban (5).

11. Siège de passager selon l'une ou plusieurs des revendications précédentes,
caractérisé par le fait
que le ruban est formé de plusieurs bandes (5, 6, 7) intégrées en superposition dans le cadre (2).
